# EUROPEAN PATENT SPECIFICATION

(11) **EP 2 568 715 B1**
(45) Date of publication and mention of the grant of the patent: **02.01.2019**
(21) Application number: 11866380.6
(22) Date of filing: 28.07.2011
(51) Int. Cl.: H04W 36/00, H04W 80/04, H04W 8/26, H04L 29/12

(54) **MOBILE NODE, CARE OF ADDRESS ACQUISITION METHOD AND SYSTEM THEREOF, AND DHCP SERVER**
MOBILER KNOTEN, ADRESSERFASSUNGSVERFAHREN UND -SYSTEM DAFÜR SOWIE DHCP-SERVER
NOEUD MOBILE, PROCÉDÉ ET SYSTÈME ASSOCIÉ D'ACQUISITION D'ADRESSE IP TEMPORAIRE, ET SERVEUR DHCP

(43) Date of publication of application: 13.03.2013
(73) Proprietor: Huawei Technologies Co., Ltd., Longgang District Shenzhen, Guangdong 518129 (CN)
(72) Inventor: FU, Yu, Shenzhen Guangdong 518129 (CN); JIANG, Sheng, Shenzhen Guangdong 518129 (CN)
(74) Representative: Epping - Hermann - Fischer
(86) International application number: PCT/CN2011/077749
(87) International publication number: WO 2012/159350

(56) References cited:
- WO-A1-2004/028053
- WO-A1-2009/142907
- CN-A- 101 043 727
- CN-A- 101 047 996
- US-A1- 2002 136 226
- US-A1- 2006 233 128
- US-A1- 2007 061 484
- US-A1- 2007 104 145
- US-A1- 2007 130 461
- US-A1- 2008 112 362
- US-A1- 2010 002 634

## Description

### Field of the Invention

The present invention relates to a mobile communication technology, and more specifically, to a mobile node, a handover address acquisition method and system thereof, and a DHCP server.

### Description of the Related Art

Mobile IP (Internet protocol) is a network-layer scheme providing mobile functionality over the Internet, such that the mobile node (i.e., mobile terminal) does not interrupt a communication on progress at the time of switching a link.

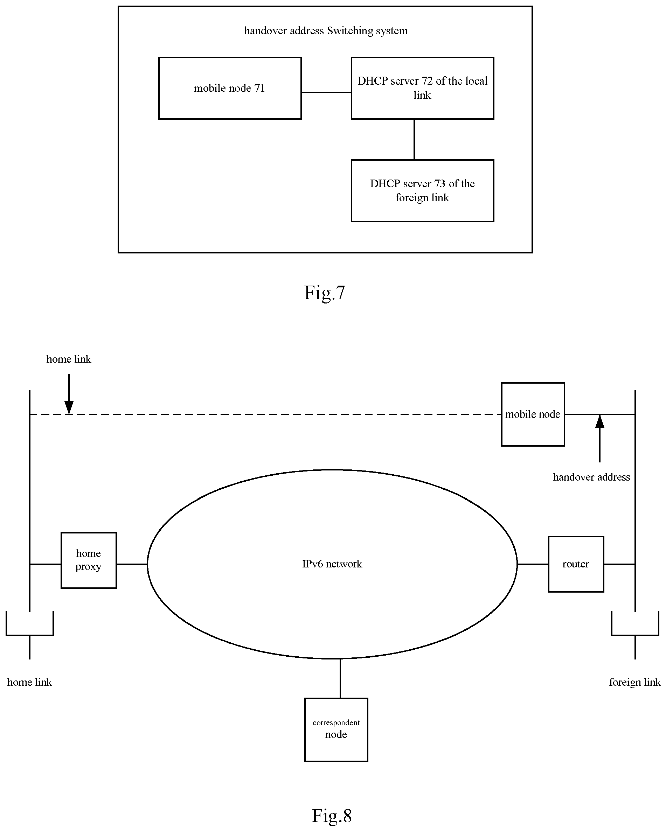

A main component of an existing mobile IPv6 (the sixth version of mobile IP) is shown in Fig.8, including: a mobile node, an IPv6 network, a home link connected to the IPv6 network through a home proxy, a foreign link (which does not belong to the home link of the mobile node, and whose subnet prefix is different from a subnet prefix of the home link of the mobile node) connected to the IPv6 network via a router, and a correspondent node directly connected to the IPv6 network. The home link, the foreign link and the correspondent node communicate with each other through the IPv6 network.

Wherein, the home link is a link for generating the mobile node, which defines the subnet prefix of the home link for the mobile node. The mobile node connected to the home link is assigned with a home address by a DHCP (Dynamic Host Configuration Protocol) server of the home link.

The home proxy is a router on the home link, which stores registration information and the home address of the mobile node located on the home link. After the mobile node has roamed from the home link to the foreign link, link handover is needed, in which, a DHCP server of the foreign link assigns a new address, which is commonly referred to as a handover address, to the mobile node. The mobile node then sends this handover address to the home proxy, and the home proxy binds the handover address with the home address of the mobile node, thus completing link handover of the mobile node. After that, if the home proxy intercepts a data packet sent to the mobile node by the correspondent node, the home proxy will encapsulate the data packet
based on the handover address bound, and then forward it through a tunnel to the mobile node that has already roamed to the foreign link.

During the link handover above of the mobile node, the inventor has found at least the following problems in the prior art: within a period of time after the mobile node has roamed from the home link to the foreign link but before the mobile node is assigned the handover address, if the home proxy receives the data packets sent to the mobile node by the correspondent node, the home proxy cannot forward the data packet to the mobile node because there is no handover address bound to the home address of the mobile node on the mobile proxy. Thus, the mobile node cannot communicate with the correspondent node during that period of time.

US 2010/0002634 A1 discloses a communication system that includes mobile IP communication apparatuses in an access service network and having proxy mobile IP client functioning units, foreign agent functioning units, and DHCP proxy functioning units, which have a common IP address. The DHCP proxy functioning unit of a first mobile IP communication apparatus, connected with a mobile station before movement, reports information about the mobile station to a second mobile IP communication apparatus connected with the mobile station after movement. The DHCP proxy functioning unit of the second mobile IP communication apparatus receives the information about the mobile station and further receives from the mobile station, an update message addressed to the common IP address, executes an IP address update process based on the information about the mobile station, and reports an update result to the proxy mobile IP client functioning unit and the foreign agent functioning unit in the second mobile IP communication apparatus.

US 2007/0061484 A1 discloses an improved technique for processing a DHCP request from a DHCP client device that is performed in a data communications device of a network (e.g., performed in a router). The technique involves receiving the DHCP request from the DHCP client device, evaluating a set of rules in response to the DHCP request to obtain a rule-based classification result, and outputting a DHCP response in response to the rule-based classification result. In some arrangements, a policy manager which is external to the data communications device plays a role in the classification process (e.g., dynamic updating of the set of rules, responding to individual queries from the data communications device when generating the rule-based classification result, etc.). Such improvements over conventional DHCP approaches enable improved flexibility and coordination of the DHCP process.

US2002/136226 A1 relates to methods and systems for enabling seamless roaming of mobile devices among wireless networks. A mobile device roams between homogenous or heterogenous wireless networks while maintaining a communication connection with a home network server for the mobile device. A network gateway manages roaming of a mobile device between heterogenous network systems. The network gateway obtains an access identifier from another heterogenous network system so the mobile device can roam to the other heterogenous network system while maintaining its connection to the home network gateway for the mobile device.

### Summary of the Invention

The invention is defined in the claims. Other embodiments and/or examples of the following description that are not covered by the claims are not considered as part of the invention. The embodiments provide a handover address acquisition method and a DHCP server of a local server, which can solve a problem that a correspondent node (which can communicate with a mobile node normally before the mobile node roams) cannot communicated with the mobile node during link handover of the mobile node.

For the above purpose, the embodiments adopt the following technical solutions:
A method for acquiring a handover address of a mobile node, comprising: receiving, by a Dynamic Host Configuration Protocol, DHCP server of a local link, a request message sent before the mobile node roams from a local link to a foreign link, the request message carrying information which requests to obtain a handover address of the mobile node on the foreign link; based on the request message, making, by the DHCP server of the local link, a request to a DHCP server of the foreign link for obtaining the handover address of the mobile node on the foreign link; generating and sending, by the DHCP server of the local link, a reply message to the mobile node, the reply message carrying the handover address of the mobile node on the foreign link, the step of making a request to the DHCP server of the foreign link comprises: based on the request message, generating and sending, by the DHCP server of the local link, a handover request message to the DHCP server of the foreign link, requesting to obtain the handover address of the mobile node on the foreign link; receiving, by the DHCP server of the local link, a handover reply message, wherein, the handover reply message is generated by the DHCP server of the foreign link based on the handover request message, and the handover reply message carries the handover address of the mobile node on the foreign link.

A mobile node, comprises: a sending module for, before the mobile node roams from a local link to a foreign link, sending a request message to a DHCP server of the local link, the request message carrying information requesting to obtain a handover address of the mobile node on the foreign link; a receiving module for receiving a reply message sent by the DHCP server of the local link, wherein, a handover address carried by the reply message is obtained after the DHCP server of the local link makes a request to a DHCP server of the foreign link based on the request message.

A DHCP server of a local link, comprises: a receiving module for receiving a request message sent before the mobile node roams from the local link to a foreign link, the request message carrying information requesting to obtain a handover address of the mobile node on the foreign link; an address requesting module for, based on the request message, making a request to the DHCP server of the foreign link for obtaining the handover address of the mobile node on the foreign link; a sending module for generating and sending a reply message to the mobile node, the reply message carrying a handover address obtained after the DHCP server of the local link makes a request to the DHCP server of the foreign link based on the request message.

A system for acquiring a handover address of a mobile node, comprises: the mobile node, the DHCP server of the local link and the DHCP server of the foreign link as described above; wherein, the mobile node is used for, before the mobile node roams from a local link to a foreign link, sending a request message to the DHCP server of the local link, the request message carrying information requesting to obtain a handover address of the mobile node on the foreign link, and then for receiving a reply message sent by the DHCP server of the local link, the reply message carrying a handover address of the mobile node on the foreign link; the DHCP server of the local link is the above-mentioned DHCP server which is used for, based on the request message, making a request to the DHCP server of the foreign link to obtain the handover address of the mobile node on the foreign link, and then for generating and sending a reply message to the mobile node, the reply message carrying a handover address of the mobile node on the foreign link; the DHCP server of the foreign link is used for assigning a handover address to the mobile node based on a request of the DHCP server of the local link, and sending the handover address to the DHCP server of the local link.

As for the mobile node, the handover address acquisition method and system, and the DHCP server, since the mobile node has already obtained a handover address by applying to the DHCP server of the foreign link through the DHCP server of the local link before roaming from the local link to the foreign link, the home proxy can receive this handover address before the mobile node roams to the foreign link, and bind this handover address with the home address of the mobile node stored locally; if the mobile node roams to the foreign link, the data packet sent by the correspondent node to the local link can be immediately sent to the mobile node by the home proxy based on the binding handover address; and thus, the problem that a correspondent node (which can communicate with a mobile node normally before the mobile node roams) cannot communicated with the mobile node during a period of time after the mobile node roams to a foreign link can be solved.

### Brief Description of the Drawings

In order to more clearly explain the technical solutions in the embodiments of the present invention or in the prior art, the drawings that may be used in the description of the embodiments will be briefly introduced. Obviously, however, the drawings in the following description are only some embodiments of the present invention, and one of ordinary skill in the art can obtain other drawings based on these drawings, without paying any creative efforts.
Fig.1 is a flowchart of a method for acquiring a handover address of a mobile node according to Embodiment One of the present invention;
Fig.2 is a block diagram of a mobile node according to Embodiment One of the present invention;
Fig.3 is a flowchart of a method for acquiring a handover address of a mobile node according to Embodiment Two of the present invention;
Fig.4 is a block diagram of a DHCP server according to Embodiment Two of the present invention;
Fig.5 is a flowchart of a method for acquiring a handover address of a mobile node according to Embodiment Three of the present invention;
Fig.6 is a block diagram of a DHCP server according to Embodiment Four of the present invention;
Fig.7 is a block diagram of a system for acquiring a handover address of a mobile node according to Embodiment Four of the present invention;
Fig.8 is an architectural diagram of an existing mobile IPv6.

### Description of the Embodiments

Below, in conjunction with the drawings in the embodiments of the present invention, the technical solutions of the present invention will be clearly and completely described. Obviously, however, the described embodiments are only a portion of the embodiments of the present invention, instead of all of them.

### Embodiment One

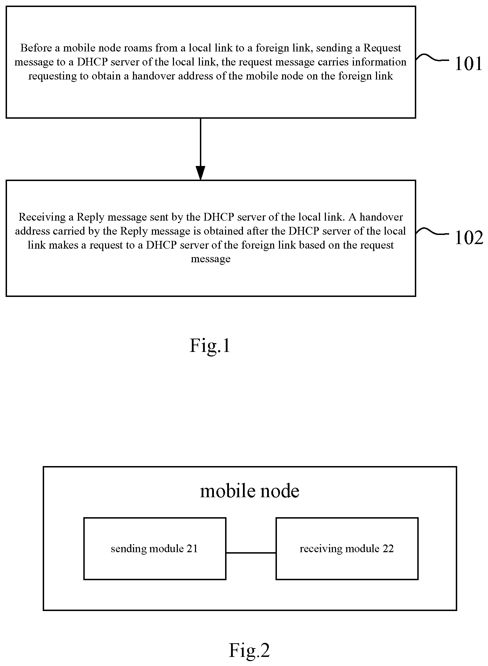

This embodiment provides a method for acquiring a handover address of a mobile node. As shown in Fig.1, this method is carried out by a mobile node in a mobile IP network, which can be a cell phone, a portable computer or other mobile terminals connected in this network. This method comprises the following steps.

101. Before a mobile node roams from a local link to a foreign link, sending a request message to a DHCP server of the local link. The request message carries information requesting to obtain a handover address of the mobile node on the foreign link.

Specifically, before the mobile node roams from the local link to the foreign link, it will move into a boundary station in the network. The boundary station is a station near a service area (e.g. Tianjin) to which the foreign link belongs but within a service area (e.g. Beijing) to which the local link belongs. The boundary station can foresee that the mobile node is about to roam from the local link to the foreign link. The mobile node can know from the boundary station that it is going to roam to the foreign link by means of the existing technology. At this point, the mobile node will send a request message to a DHCP server of the local link on which the mobile node currently locates. This request message is a message that the mobile node requests the DHCP server to assign an address and whose format can be any format known by one of ordinary skill in the art. The request message carries information requesting to obtain a handover address on the foreign link for the mobile node. This information is used for informing the DHCP server of the local link that the request message is used for requesting to obtain a handover address on the foreign link for the mobile node.

Note that, the local link is a link on which the mobile node currently locates. The local link can either be a home link or not a home link. For example, assumed that the home link is Beijing and the foreign link is Tianjin, roaming from the local link to the foreign link means roaming from Beijing to Tianjin. If the local link is not a home link, for example, the local link is Shandong, roaming from the local link to the foreign link means roaming from Shandong to Tianjin.

102. Receiving a reply message sent by the DHCP server of the local link. A handover address carried by the reply message is obtained after the DHCP server of the local link makes a request to a DHCP server of the foreign link based on the request message.

Specifically, after the DHCP server of the local link has received the request message, it requests the DHCP server of the foreign link to assign a handover address for the mobile node, based on the request message carrying information requesting to obtain a handover address of the mobile node on the foreign link, and it can also request configuration information related to the mobile node. After the handover address is obtained, the DHCP server of the local link will generate a reply message which carries this handover address and also can carry the configuration information above. Subsequently, the DHCP server of the local link will send the reply message to the mobile node.

The reply message is a message generated by the DHCP server in response to a request message from the mobile node for allocating a handover address of the mobile node and the handover address being assigned to the mobile node. The format of the reply message can be any format known to one of ordinary skill in the art. The reply message carries the handover address on the foreign link for the mobile node.

After the mobile node has received the handover address, this handover address can be sent to the home proxy for binding by means of an existing binding method.

In the method for acquiring a handover address of a mobile node according to this embodiment, since the mobile node, before roaming from the local link to the foreign link, has already obtained a handover address by applying to the DHCP server of the foreign link through the DHCP server of the local link, the home proxy can obtain and bind this handover address before the mobile node roams to the foreign link. If the mobile node roams to the foreign link, the data packet sent by the correspondent node to the home link can be immediately sent to the mobile node by the home proxy based on the handover address bound. The problem that a correspondent node (which can communicate with a mobile node normally before the mobile node roams) cannot communicated with the mobile node during a period of time after the mobile node roams to a foreign link can be solved by far.

The embodiment also provides a mobile node. As shown in Fig.2, the mobile node comprises: a sending module 21 configured to, before the mobile node roams from a local link to a foreign link, send a request message to a DHCP server of the local link, the request message carrying information requesting to obtain a handover address of the mobile node on the foreign link; a receiving module 22 configured to receive a reply message sent by the DHCP server of the local link, wherein, a handover address carried by the reply message can be obtained after the DHCP server of the local link makes a request to the DHCP server of the foreign link based on the request message.

The methods executed by the above-mentioned modules have already been described in detail in the above description of the methods, and thus details thereof are omitted.

As for the mobile node according to this embodiment, since the mobile node, before roaming from the local link to the foreign link, has already obtained a handover address by applying to the DHCP server of the foreign link through the DHCP server of the local link, the home proxy can obtain and bind this handover address before the mobile node roams to the foreign link. If the mobile node roams to the foreign link, the data packet sent by the correspondent node to the home link can be immediately sent to the mobile node by the home proxy based on the handover address bound; and thus, the problem that a correspondent node (which can communicate with a mobile node normally before the mobile node roams) cannot communicated with the mobile node during a period of time after the mobile node roams to a foreign link can be solved.

### Embodiment Two

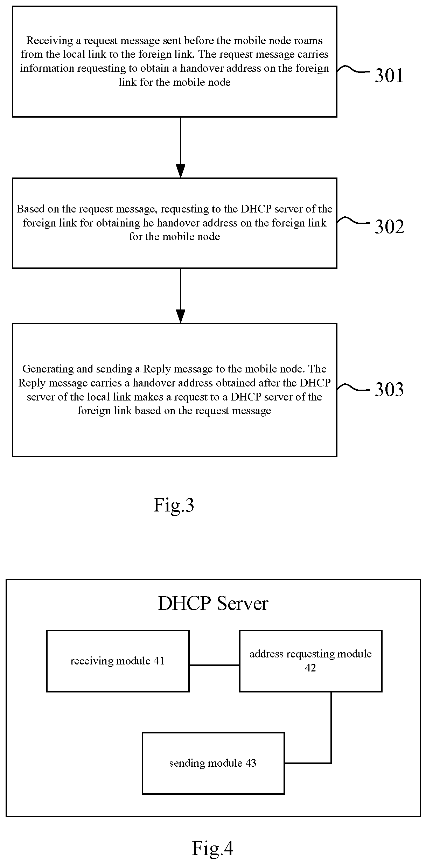

This embodiment provides a method for a link handover of a mobile node. As shown in Fig.3, the method is carried out by a device located on a link of a mobile IP network and used for assigning an IP address and other network configuration information to a mobile node on this link, such as a DHCP server. This method comprises the following steps.

301. Receiving a request message sent from the mobile node before the mobile node roams from the local link to the foreign link. The request message carries information requesting to obtain a handover address on the foreign link for the mobile node.

Specifically, before the mobile node roams from the local link to the foreign link, it will move into a boundary station in the network. The boundary station is a station near a service area (e.g. Tianjin) to which the foreign link belongs but within a service area (e.g. Beijing) to which the local link belongs. The boundary station can foresee that the mobile node is about to roam from the local link to the foreign link. The mobile node can know from the boundary station that it is going to roam to the foreign link by means of the existing technology. At this point, the mobile node will send a request message to a DHCP server of the local link on which the mobile node currently locates. This request message is a message that the mobile node requests the DHCP server to assign an address and whose format can be any format known by one of ordinary skill in the art. The request message carries information requesting to obtain a handover address on the foreign link for the mobile node. This information is used for informing the DHCP server of the local link that the request message is used for requesting to obtain a handover address on the foreign link for the mobile node.

Note that, the local link is a link on which the mobile node currently locates. The local link can either be a home link or not a home link. For example, assumed that the home link is Beijing and the foreign link is Tianjin, roaming from the local link to the foreign link means roaming from Beijing to Tianjin. If the local link is not a home link, for example, the local link is Shandong, roaming from the local link to the foreign link means roaming from Shandong to Tianjin.

302. Based on the request message, requesting to the DHCP server of the foreign link for obtaining he handover address on the foreign link for the mobile node.

Specifically, after the DHCP server of the local link has received the request message from the mobile node, it requests the DHCP server of a roaming destination (the foreign link) to assign a handover address for the mobile node, based on the request message carrying information requesting to obtain a handover address of the mobile node on the foreign link, and it can also request configuration information related to the mobile node.

303. Generating and sending a reply message to the mobile node. The reply message carries a handover address obtained after the DHCP server of the local link makes a request to a DHCP server of the foreign link based on the request message.

Specifically, after the DHCP server of the local link makes a request to the DHCP server of the foreign link based on the request message and obtains a handover address, a reply message carrying the handover address will be generated, which also can carry the configuration information above. Subsequently, the reply message is sent to the mobile node. After the mobile node has received the handover address, the handover address can be sent to the home proxy for binding by means of an existing binding method.

The reply message is a message generated by the DHCP server in response to a request message from the mobile node for allocating a handover address of the mobile node and the handover address being assigned to the mobile node. The format of the reply message can be any format known to one of ordinary skill in the art. The reply message carries the handover address of the mobile node on the foreign link.

In the method for acquiring a handover address of a mobile node according to this embodiment, since the mobile node, before roaming from the local link to the foreign link, has already obtained a handover address by applying to the DHCP server of the foreign link through the DHCP server of the local link, the home proxy can obtain and bind this handover address before the mobile node roams to the foreign link. If the mobile node roams to the foreign link, the data packet sent by the correspondent node to the home link can be immediately sent to the mobile node by the home proxy based on the handover address bound. The problem that a correspondent node (which can communicate with a mobile node normally before the mobile node roams) cannot communicated with the mobile node during a period of time after the mobile node roams to a foreign link can be solved by far.

The embodiment also provides a DHCP server. As shown in Fig.4, the DHCP server comprises: a receiving module 41 configured to receive a request message sent from the mobile node before the mobile node roams from a local link to a foreign link, the request message carrying information requesting to obtain a handover address of the mobile node on the foreign link; an address requesting module 42 configured to, based on the request message, make a request to a DHCP server of the foreign link for obtaining the handover address of the mobile node on the foreign link; a sending module 43 configured to generate and send a reply message to the mobile node, the reply message carrying a handover address obtained after the DHCP server of the local link makes a request to a DHCP server of the foreign link based on the request message.

The methods executed by the above-mentioned modules have already been described in detail in the above description of the method, and thus details thereof are omitted.

As for the DHCP server according to the embodiment, since the mobile node, before roaming from the local link to the foreign link, has already obtained a handover address by applying to the DHCP server of the foreign link through the DHCP server of the local link, the home proxy can obtain and bind this handover address before the mobile node roams to the foreign link. If the mobile node roams to the foreign link, the data packet sent by the correspondent node to the home link can be immediately sent to the mobile node by the home proxy based on the handover address bound. The problem that a correspondent node (which can communicate with a mobile node normally before the mobile node roams) cannot communicated with the mobile node during a period of time after the mobile node roams to a foreign link can be solved.

### Embodiment Three

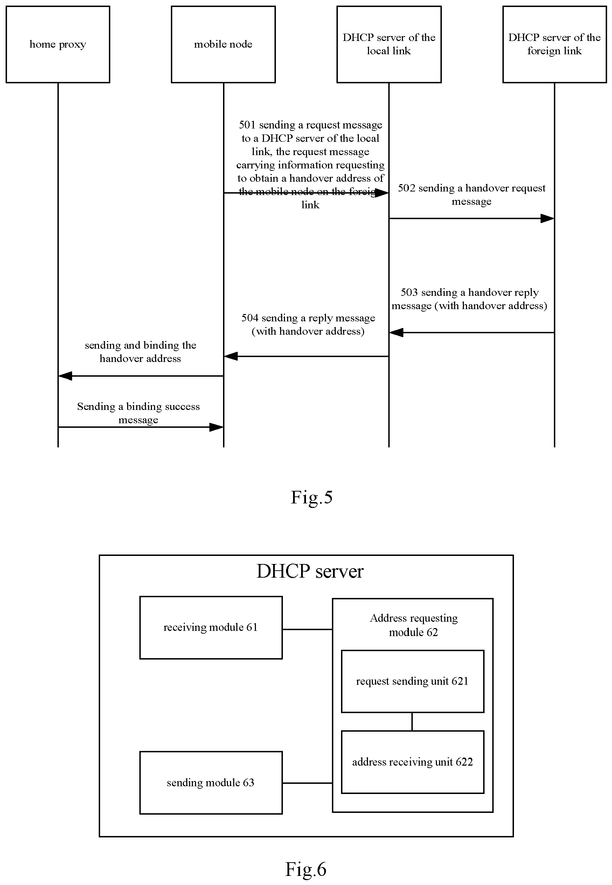

The embodiment provides a method for acquiring a handover address of a mobile node. As shown in Fig.5, The method comprises the following steps.

501. Before the mobile node roams from a local link to a foreign link, sending a request message to a DHCP server of the local link, the request message carrying information requesting to obtain a handover address of the mobile node on the foreign link.

Specifically, before the mobile node roams from the local link to the foreign link, it will move into a boundary station in the network. The boundary station is a station near a service area (e.g. Tianjin) to which the foreign link belongs but within a service area (e.g. Beijing) to which the local link belongs. The boundary station can foresee that the mobile node is about to roam from the local link to the foreign link. The mobile node can know from the boundary station that it is going to roam to the foreign link by means of the existing technology. At this point, the mobile node will send a request message to a DHCP server of the local link on which the mobile node currently locates. This request message is a message that the mobile node requests the DHCP server to assign an address and whose format can be any format known by one of ordinary skill in the art. The request message carries information requesting to obtain a handover address on the foreign link for the mobile node. This information is used for informing the DHCP server of the local link that the request message is used for requesting to obtain a handover address on the foreign link for the mobile node.

Note that, the local link is a link on which the mobile node currently locates. The local link can either be a home link or not a home link. For example, assumed that the home link is Beijing and the foreign link is Tianjin, roaming from the local link to the foreign link means roaming from Beijing to Tianjin. If the local link is not a home link, for example, the local link is Shandong, roaming from the local link to the foreign link means roaming from Shandong to Tianjin.

502. Based on the request message, the DHCP server of the local link generates and sends a handover request message to the DHCP server of the foreign link, requesting to obtain a handover address of the mobile node on the foreign link.

Specifically, after the DHCP server of the local link has received the request message, it obtains information about the handover address of the mobile node on the foreign link based on the request carried in the message, generates a handover request message, and then sends the handover request message to the DHCP server of the foreign link, thereby requesting the DHCP server of the foreign link to assign a handover address to the mobile node. Moreover, configuration information related to the mobile node also can be requested.

The request message can contain a handover Initial option within which the information requesting to obtain a handover address of the mobile node on the foreign link can be carried.

The handover initial option can have the following format:

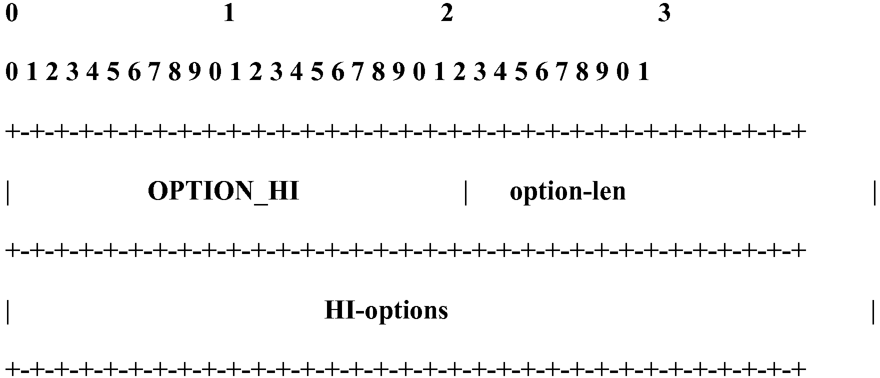

Wherein, numbers 0 to 3 in the first row respectively represent a serial number of a byte; numbers 0 to 9 in the second row respectively represent one binary bit, eight binary bits correspond to one byte; OPTION_HI is the content within the initial option code field "option-code", and can have a length of 16 bits; the initial option length field "option-length" records the length (the number of the bytes) of the handover initial option, which can have a length of 16 bits; the initial option content field "HI-options" records other relevant information in the handover initial option, which has a length of 32×N bits, wherein, N is a positive integer, and the length of HI-options can be selected according to the content of the relevant information.

503. Based on the handover request message, the DHCP server of the foreign link generates and sends a handover reply message to the DHCP server of the local link. The handover reply message carries a handover address of the mobile node on the foreign link.

Specifically, after the DHCP server of the foreign link has received the handover request message, a handover address is assigned to the mobile node based on the handover request message, and meanwhile configuration information related to the mobile node is generated. Subsequently, the DHCP server of the foreign link generates a handover reply message carrying the handover address, or the handover address and the configuration information above, and then sends the handover reply message to the DHCP server of the local link.

The handover reply message can include a newly-added option named as Handover Acknowledge option carrying the handover address, or the handover address and the configuration information. The option can have the following format:

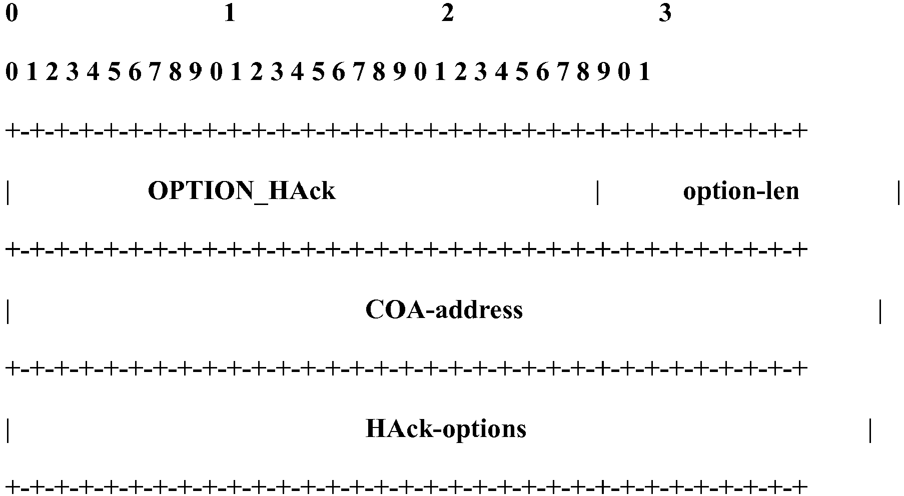

The handover acknowledge option comprises: an acknowledge option code field "option-code", which has a content of OPTION_HAck and a length of 16 bits; an acknowledge option length field "option-length", which has a length of 16 bits and records the length (the number of bytes) of the handover acknowledge option; a handover address field "COA-address" which stores the handover address assigned by the DHCP server of the foreign link to the mobile node and has a length of 32xN bits, wherein, N is a positive integer, when the handover address is IPv4 address, N=1 and the length of COA-address is 32 bits, when the handover address is IPv6, N=4 and the length of COA-address is 32×4(=128) bits; an acknowledge option content field "HAck-options", which records other related information(e.g. the above configuration information) in the handover acknowledge option and has a length of 32×N bits, wherein, N is a positive integer and the length of HAck-options can be selected according to the content of the related information.

In addition, numbers 0 to 3 in the first row respectively represent a serial number of a byte; numbers 0 to 9 in the second row respectively represent one binary bit, eight bits correspond to one byte.

The above handover request message and the handover reply message are newly defined messages, which can have the following format:

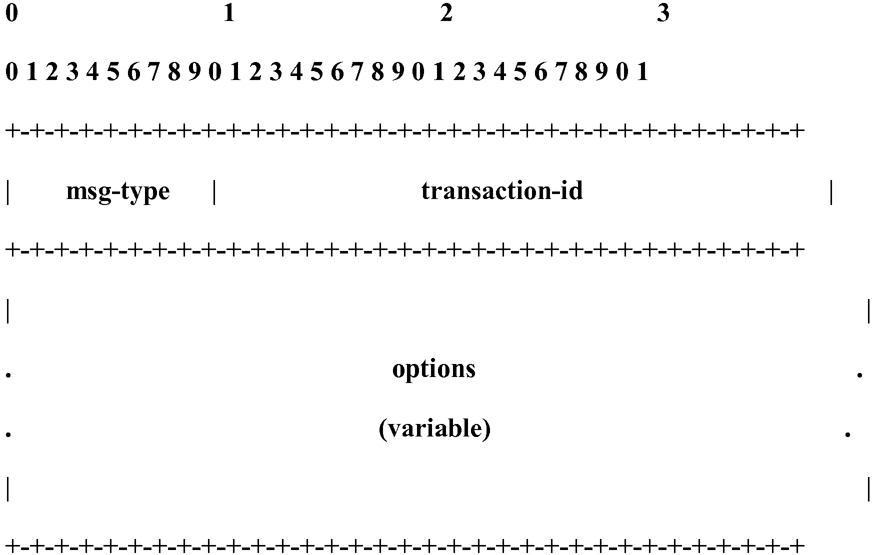

Wherein, msg-type represents the type number of different DHCP messages and can have a length of 8 bits; transaction-id indicates a transmission identity and can have a length of 24 bits. In order to ensure that the message can be reliably sent to a receiver, a same message may be sent several times so as to avoid loss of message due to an unstable network. The transmission identity is used for synchronizing messages sent from the DHCP and the client.

"Options" represents the specific option content, wherein, when the message is a handover request message, "options" can contain the above handover initial option; when the message is a handover reply message, "options" can contain the above handover acknowledge option.

Note that, when the DHCP server of the local link makes a request to the DHCP server of the foreign link for obtaining a handover address of the mobile node on the foreign link as well as configuration information, the present invention is not limited to the method described in steps 502 to 503, and other methods known by one of ordinary skill in the art also can be used.

504. Based on the handover reply message, the DHCP server of the local link generates and sends a reply message to the mobile node. The reply message may carry a handover address carried by the handover reply message.

Specifically, after the DHCP server of the local link has received the handover reply message, a reply message is generated based on the handover reply, wherein, the reply message carries a handover address, or a handover address and configuration information contained in the handover reply message. Subsequently, the DHCP server of the local link sends the reply message to the mobile node.

The reply message is a message generated by the DHCP server in response to a request message from the mobile node for allocating a handover address of the mobile node and the handover address being assigned to the mobile node. The reply message carries a handover address of the mobile node on the foreign link. The reply message can comprise the handover acknowledge option above within which the handover address or the handover address and configuration information can be contained.

After the mobile node has received the reply message, a handover address is acquired and then a binding update message comprising the handover address is sent to the home proxy in an existing manner. Subsequently, after the home proxy has received the binding update message sent from the mobile node, it binds the handover address in the message with the home address of the mobile node locally stored in an existing manner, and then generates a binding success message. The binding success message is sent to the mobile node.

In the method for acquiring a handover address of a mobile node according to the embodiment, since the mobile node, before roaming from the local link to the foreign link, has already obtained a handover address by applying to the DHCP server of the foreign link through the DHCP server of the local link, the home proxy can obtain and bind this handover address before the mobile node roams to the foreign link. If the mobile node roams to the foreign link, the data packet sent by the correspondent node to the home link can be immediately sent to the mobile node by the home proxy based on the handover address bound. The problem that a correspondent node (which can communicate with a mobile node normally before the mobile node roams) cannot communicated with the mobile node during a period of time after the mobile node roams to a foreign link can be solved.

### Embodiment Four

The embodiment also provides a DHCP server. As shown in Fig.6, the DHCP server comprises: a receiving module 61 configured to receive a request message sent from the mobile node before the mobile node roams from a local link to a foreign link, the request message carrying information requesting to obtain a handover address of the mobile node on the foreign link; an address requesting module 62 configued to, based on the request message, make a request to a DHCP server of the foreign link to obtain the handover address of the mobile node on the foreign link; a sending module 63 configued to generate and send a reply message to the mobile node, the reply message carrying a handover address obtained after the DHCP server of the local link makes a request to a DHCP server of the foreign link based on the request message.

The address requesting module 62 can comprise: a request sending unit 621 configured to, based on the request message, generate and send a handover request message to the DHCP server of the foreign link, requesting to obtain a handover address of the mobile node on the foreign link; an address receiving unit 622 configured to receive a handover reply message, wherein, the handover reply message is generated by the DHCP server of the foreign link based on the handover request message and carries the handover address of the mobile node on the foreign link.

The methods executed by the above-mentioned modules and units have already been described in detail in Embodiment Three, and thus details thereof are omitted.

As for the DHCP server according to the embodiment, since the mobile node, before roaming from the local link to the foreign link, has already obtained a handover address by applying to the DHCP server of the foreign link, the home proxy can obtain and bind this handover address before the mobile node roams to the foreign link. If the mobile node roams to the foreign link, the data packet sent by the correspondent node to the home link can be immediately sent to the mobile node by the home proxy based on the handover address bound. The problem that a correspondent node (which can communicate with a mobile node normally before the mobile node roams) cannot communicated with the mobile node during a period of time after the mobile node roams to a foreign link can be solved.

The embodiment also provides a system for acquiring a handover address of a mobile node. As shown in Fig.7, the system comprises: mobile node 71, DHCP server 72 of the local link and DHCP server 73 of the foreign link; wherein, the mobile node 71 is the mobile node described in Embodiment One and configured to, before the mobile node roams from a local link to a foreign link, send a request message to the DHCP server 72 of the local link, the request message carrying information requesting to obtain a handover address of the mobile node on the foreign link, and then to receive a reply message sent by the DHCP server 72 of the local link, the reply message carrying a handover address of the mobile node on the foreign link; the DHCP server 72 of the local link is the DHCP server described in Embodiment Two and in the embodiment, and configured to, based on the request message, make a request to the DHCP server 73 of the foreign link for obtaining the handover address of the mobile node on the foreign link, and then to generate and send a reply message to the mobile node 71, the reply message carrying the handover address of the mobile node on the foreign link; the DHCP server 73 of the foreign link is configured to assign a handover address for the mobile node 71 based on a request of the DHCP server 72 of the local link, and send the handover address to the DHCP server 72 of the local link.

In the system for acquiring a handover address of a mobile node according to the embodiment, since the mobile node has already obtained a handover address by applying to the DHCP server of the foreign link through the DHCP server of the local link before roaming from the local link to the foreign link, the home proxy can obtain the handover address before the mobile node roams to the foreign link and perform binding; if the mobile node roams to the foreign link, the data packet sent by the correspondent node to the home link can be immediately sent to the mobile node by the home proxy based on the handover address bound; and thus, the problem that a correspondent node (which can communicate with a mobile node normally before the mobile node roams) cannot communicated with the mobile node during a period of time after the mobile node roams to a foreign link can be solved.

The embodiments of the present invention are mainly used in a network supporting mobile IP.

With the above description of the embodiments, one of ordinary skill in the art can clearly understand that the present invention can be implemented by means of software plus necessary general hardware, and of course, can be implemented by hardware, but the former is a best mode in most cases. Based on such understanding, the technical solution of the present invention or the part that makes a contribution to the prior art essentially can be embodied in a form of a software product. The computer software product is stored in a readable storage medium, such as floppy disk, hard disk, or optical disk of a computer, comprising several instructions for making a computer (which can be a personal computer, a server, or a network device) execute the method described in various embodiments of the present invention.

The above are merely particular embodiments of the present invention, and the scope of the present invention is not limited to this. One of ordinary skill in the art can easily conceive other modifications and replacements within the technical scope disclosed in the present invention, and these modifications and replacements all should be covered within the scope of the present invention. Thus, the scope of the present invention should be subject to the scope defined by the attached claims.

## Claims

1. A method for acquiring a handover address of a mobile node (71), comprising:
receiving (301), by a Dynamic Host Configuration Protocol, DHCP server (72) of a local link, a request message sent before the mobile node (71) roams from a local link to a foreign link, the request message carrying information which requests to obtain a handover address of the mobile node (71) on the foreign link;
based on the request message, making (302), by the DHCP server (72) of the local link, a request to a DHCP server (73) of the foreign link for obtaining the handover address of the mobile node (71) on the foreign link;
generating and sending (303), by the DHCP server (72) of the local link, a reply message to the mobile node (71), the reply message carrying the handover address of the mobile node (71) on the foreign link,
**characterized in that** the step of making a request (302) to the DHCP server (73) of the foreign link comprises:
based on the request message, generating and sending, by the DHCP server (72) of the local link, a handover request message to the DHCP server (73) of the foreign link, requesting to obtain the handover address of the mobile node (71) on the foreign link;
receiving, by the DHCP server (72) of the local link, a handover reply message, wherein, the handover reply message is generated by the DHCP server (73) of the foreign link based on the handover request message, and the handover reply message carries the handover address of the mobile node (71) on the foreign link.

2. The method of claim 1, wherein, the request message comprises a handover initial option within which the information requesting to obtain the handover address of the mobile node (71) on the foreign link is carried.

3. The method of claim 2, wherein, the handover request message comprises: a first message type number for representing a type of a message; a first transmission identity for representing a message sending sequence; and the handover initial option, wherein, the handover initial option comprises: an initial option code field, an initial option length field, and an initial option content field.

4. The method of claim 1, wherein, the handover reply message comprises: a second message type number for representing a type of a message; a second transmission identity for synchronizing messages between a message receiver and a message sender; and a handover acknowledge option;
the handover address carried by the handover reply message is carried in the handover acknowledge option;
wherein, the reply message comprises the handover acknowledge option.

5. The method of claim 4, wherein, the handover acknowledge option comprises: an acknowledge option code field, an acknowledge option length field, a handover address field, and an acknowledge option content field, wherein, the handover address field carries the handover address carried by the handover reply message.

6. The method of claim 1, further comprising before the receiving (301) step,
before the mobile node (71) roams from the local link to the foreign link, the mobile node (71) sending (101) the request message to the DHCP server (72) of the local link; and
the method further comprising after the generating and sending (303) step, the mobile node (71) receiving (102) the reply message sent by the DHCP server (72) of the local link, wherein, the handover address of the mobile node (71) on the foreign link carried by the reply message is obtained by the mobile node (71).

7. The method of claim 1, further comprising after the making (302) step,
the DHCP server (73) of the foreign link, based on the handover request message, generates and sends the handover reply message to the DHCP server (72) of the local link.

8. A Dynamic Host Configuration Protocol, DHCP, server (72) of a local link, **characterized in** comprising:
a receiving module (41) configured to receive a request message sent before the mobile node (71) roams from the local link to a foreign link, the request message carrying information requesting to obtain a handover address of the mobile node (71) on the foreign link;
an address requesting module (42) configured to, based on the request message, make a request to a DHCP server (73) of the foreign link for obtaining the handover address of the mobile node (71) on the foreign link;
a sending module (43) configured to generate and send a reply message to the mobile node (71), the reply message carrying a handover address obtained after the DHCP server (72) of the local link makes a request to the DHCP server (73) of the foreign link based on the request message, **characterized in that** the address requesting module comprises:
a request sending unit (621) configured to, based on the request message, generate and send a handover request message to the DHCP server (73) of the foreign link, requesting to obtain a handover address of the mobile node (71) on the foreign link;
an address receiving unit (622) configured to receive a handover reply message, wherein, the handover reply message is generated by the DHCP server (73) of the foreign link based on the handover request message and carries the handover address of the mobile node (71) on the foreign link.

9. The DHCP server (72) of a local link of claim 8, wherein, the request message comprises a handover initial option within which the information requesting to obtain the handover address of the mobile node (71) on the foreign link is carried, and
wherein, the handover request message comprises: a first message type number for representing a type of a message; a first transmission identity for representing a message sending sequence; and the handover initial option, wherein, the handover initial option comprises: an initial option code field, an initial option length field, and an initial option content field.

10. The DHCP server (72) of a local link of claim 8, wherein, the handover reply message comprises: a second message type number for representing a type of a message; a second transmission identity for synchronizing messages between a message receiver and a message sender; and a handover acknowledge option;
the handover address of the mobile node (71) on the foreign link carried by the handover reply message is carried in the handover acknowledge option;
wherein, the reply message comprises the handover acknowledge option, and
wherein, the handover acknowledge option comprises: an acknowledge option code field, an acknowledge option length field, a handover address field, and an acknowledge option content field, wherein, the handover address field carries the handover address of the mobile node (71) on the foreign link carried by the handover reply message.

## Patentansprüche

1. Verfahren zum Erfassen einer "Handover"-Adresse eines Mobilknotens (71), das Folgendes umfasst:
Empfangen (301), durch einen "Dynamic-Host-Configuration-Protocol"- bzw. DHCP-Server (72) einer lokalen Verbindung, einer Anforderungsnachricht, die gesendet wurde, bevor sich der Mobilknoten (71) von einer lokalen Verbindung zu einer fremden Verbindung bewegt, wobei die Anforderungsnachricht Informationen trägt, die anfordern, eine "Handover"-Adresse von dem Mobilknoten (71) über die fremde Verbindung zu erhalten;
Vornehmen (302), durch den DHCP-Server (72) der lokalen Verbindung, einer Anforderung an einen DHCP-Server (73) der fremden Verbindung basierend auf der Anforderungsnachricht zum Erhalten der "Handover"-Adresse des Mobilknotens (71) über die fremde Verbindung;
Erzeugen und Senden (303), durch den DHCP-Server (72) der lokalen Verbindung, einer Antwortnachricht an den Mobilknoten (71), wobei die Antwortnachricht die "Handover"-Adresse des Mobilknotens (71) über die fremde Verbindung trägt,
**dadurch gekennzeichnet, dass** der Schritt des Vornehmens einer Anforderung (302) an den DHCP-Server (73) der fremden Verbindung Folgendes umfasst:
Erzeugen und Senden, durch den DHCP-Server (72) der lokalen Verbindung, einer "Handover"-Anforderungsnachricht an den DHCP-Server (73) der fremden Verbindung, die anfordert, die "Handover"-Adresse des Mobilknotens (71) über die fremde Verbindung zu erhalten, basierend auf der Anforderungsnachricht;
Empfangen, durch den DHCP-Server (72) der lokalen Verbindung, einer "Handover"-Antwortnachricht, wobei die "Handover"-Antwortnachricht durch den DHCP-Server (73) der fremden Verbindung basierend auf der "Handover"-Anforderungsnachricht erzeugt wird und wobei die "Handover"-Antwortnachricht die "Handover"-Adresse des Mobilknotens (71) über die fremde Verbindung trägt.

2. Verfahren nach Anspruch 1, wobei die Anforderungsnachricht eine "Handover"-Initialoption umfasst, innerhalb der die Informationen, die das Erhalten der "Handover"-Adresse des Mobilknotens (71) über die fremde Verbindung anfordern, getragen werden.

3. Verfahren nach Anspruch 2, wobei die "Handover"-Anforderungsnachricht Folgendes umfasst: eine erste Nachrichtentypzahl zum Repräsentieren eines Typs einer Nachricht; eine erste Übertragungsidentität zum Repräsentieren einer Nachrichtensendesequenz; und die "Handover"-Initialoption, wobei die "Handover"-Initialoption Folgendes umfasst: ein Initialoptionscodefeld, ein Initialoptionslängenfeld und ein Initialoptionsinhaltsfeld.

4. Verfahren nach Anspruch 1, wobei die "Handover"-Antwortnachricht Folgendes umfasst: eine zweite Nachrichtentypzahl zum Repräsentieren eines Typs einer Nachricht; eine zweite Übertragungsidentität zum Synchronisieren von Nachrichten zwischen einem Nachrichtenempfänger und einem Nachrichtensender; und eine "Handover"-Bestätigungsoption;
die "Handover"-Adresse, die durch die "Handover"-Antwortnachricht getragen wird, in der "Handover"-Bestätigungsoption getragen wird;
wobei die Antwortnachricht die "Handover"-Bestätigungsoption umfasst.

5. Verfahren nach Anspruch 4, wobei die "Handover"-Bestätigungsoption Folgendes umfasst: ein Bestätigungsoptionscodefeld, ein Bestätigungsoptionslängenfeld, ein "Handover"-Adressenfeld und ein Bestätigungsoptionsinhaltsfeld, wobei das "Handover"-Adressenfeld die "Handover"-Adresse trägt, die durch die "Handover"-Antwortnachricht getragen wird.

6. Verfahren nach Anspruch 1, das ferner vor dem Schritt des Empfangens (301) Folgendes umfasst:
bevor sich der Mobilknoten (71) von der lokalen Verbindung zu der fremden Verbindung bewegt, Senden (101), durch den Mobilknoten (71), der Anforderungsnachricht an den DHCP-Server (72) der lokalen Verbindung; und
wobei das Verfahren ferner nach dem Schritt des Erzeugens und Sendens (303) Empfangen (102), durch den Mobilknoten (71), der Antwortnachricht, die durch den DHCP-Server (72) der lokalen Verbindung gesendet wurde, umfasst, wobei die "Handover"-Adresse des Mobilknotens (71) über die fremde Verbindung, die durch die Antwortnachricht getragen wird, durch den Mobilknoten (71) erhalten wird.

7. Verfahren nach Anspruch 1, das ferner nach dem Schritt des Vornehmens (302) umfasst, dass der DHCP-Server (73) der fremden Verbindung basierend auf der "Handover"-Anforderungsnachricht die "Handover"-Antwortnachricht erzeugt und an den DHCP-Server (72) der lokalen Verbindung sendet.

8. "Dynamic-Host-Configuration-Protocol"- bzw. DHCP-Server (72) einer lokalen Verbindung, **dadurch gekennzeichnet, dass** er Folgendes umfasst:
ein Empfangsmodul (41), das zum Empfangen einer Anforderungsnachricht, die gesendet wurde, bevor sich der Mobilknoten (71) von der lokalen Verbindung zu einer fremden Verbindung bewegt, konfiguriert ist, wobei die Anforderungsnachricht Informationen trägt, die anfordern, eine "Handover"-Adresse von dem Mobilknoten (71) über die fremde Verbindung zu erhalten;
ein Adressenanforderungsmodul (42), das zum Vornehmen einer Anforderung an einen DHCP-Server (73) der fremden Verbindung basierend auf der Anforderungsnachricht zum Erhalten der "Handover"-Adresse des Mobilknotens (71) über die fremde Verbindung konfiguriert ist;
ein Sendemodul (43), das zum Erzeugen und Senden einer Antwortnachricht an den Mobilknoten (71) konfiguriert ist, wobei die Antwortnachricht eine "Handover"-Adresse trägt, die erhalten wurde, nachdem der DHCP-Server (72) der lokalen Verbindung eine Anforderung an den DHCP-Server (73) der fremden Verbindung basierend auf der Anforderungsnachricht vornimmt, **dadurch gekennzeichnet, dass** das Adressenanforderungsmodul Folgendes umfasst:
eine Anforderungssendeeinheit (621), die zum Erzeugen und Senden einer "Handover"-Anforderungsnachricht an den DHCP-Server (73) der fremden Verbindung, die anfordert, eine "Handover"-Adresse des Mobilknotens (71) über die fremde Verbindung zu erhalten, basierend auf der Anforderungsnachricht konfiguriert ist;
eine Adressenempfangseinheit (622), die zum Empfangen einer "Handover"-Antwortnachricht konfiguriert ist, wobei die "Handover"-Antwortnachricht durch den DHCP-Server (73) der fremden Verbindung basierend auf der "Handover"-Anforderungsnachricht erzeugt wird und die "Handover"-Adresse des Mobilknotens (71) über die fremde Verbindung trägt.

9. DHCP-Server (72) einer lokalen Verbindung nach Anspruch 8, wobei die Anforderungsnachricht eine "Handover"-Initialoption umfasst, innerhalb der die Informationen, die das Erhalten der "Handover"-Adresse des Mobilknotens (71) über die fremde Verbindung anfordern, getragen werden, und
wobei die "Handover"-Anforderungsnachricht Folgendes umfasst: eine erste Nachrichtentypzahl zum Repräsentieren eines Typs einer Nachricht; eine erste Übertragungsidentität zum Repräsentieren einer Nachrichtensendesequenz; und die "Handover"-Initialoption, wobei die "Handover"-Initialoption Folgendes umfasst:
ein Initialoptionscodefeld, ein Initialoptionslängenfeld und ein Initialoptionsinhaltsfeld.

10. DHCP-Server (72) einer lokalen Verbindung nach Anspruch 8, wobei die "Handover"-Antwortnachricht Folgendes umfasst: eine zweite Nachrichtentypzahl zum Repräsentieren eines Typs einer Nachricht; eine zweite Übertragungsidentität zum Synchronisieren von Nachrichten zwischen einem Nachrichtenempfänger und einem Nachrichtensender; und eine "Handover"-Bestätigungsoption;
die "Handover"-Adresse des Mobilknotens (71) über die fremde Verbindung, die durch die "Handover"-Antwortnachricht getragen wird, in der "Handover"-Bestätigungsoption getragen wird;
wobei die Antwortnachricht die "Handover"-Bestätigungsoption umfasst, und wobei die "Handover"-Bestätigungsoption Folgendes umfasst: ein Bestätigungsoptionscodefeld, ein Bestätigungsoptionslängenfeld, ein "Handover"-Adressenfeld und ein Bestätigungsoptionsinhaltsfeld, wobei das "Handover"-Adressenfeld die "Handover"-Adresse des Mobilknotens (71) über die fremde Verbindung trägt, die durch die "Handover"-Antwortnachricht getragen wird.

## Revendications

1. Procédé pour acquérir une adresse de transfert intercellulaire d'un noeud mobile (71), comprenant :
la réception (301), par un serveur de protocole de configuration d'hôte dynamique, DHCP, (72) d'une liaison locale, d'un message de demande envoyé avant que le noeud mobile (71) ne passe d'une liaison locale à une liaison étrangère, le message de demande portant des informations de support qui demandent d'obtenir une adresse de transfert intercellulaire du noeud mobile (71) sur la liaison étrangère ;
sur la base du message de demande, l'adresse (302), par le serveur DHCP (72) de liaison locale, d'une demande à un serveur DHCP (73) de la liaison étrangère pour obtenir l'adresse de transfert intercellulaire du noeud mobile (71) sur liaison étrangère ;
la génération et l'envoi (303), par le serveur DHCP (72) de la liaison locale, d'un message de réponse au noeud mobile (71), le message de réponse portant l'adresse de transfert intercellulaire du noeud mobile (71) sur la liaison étrangère,
**caractérisé en ce que** l'étape consistant à adresser une demande (302) au serveur DHCP (73) de la liaison étrangère comprend :
sur la base du message de demande, la génération et l'envoi, par le serveur DHCP (72) de la liaison locale, d'un message de demande de transfert intercellulaire au serveur DHCP (73) de la liaison étrangère, demandant d'obtenir l'adresse de transfert intercellulaire du noeud mobile (71) sur la liaison étrangère ;
la réception, par le serveur DHCP (72) de la liaison locale, d'un message de réponse de transfert intercellulaire, dans lequel le message de réponse de transfert intercellulaire est généré par le serveur DHCP (73) de la liaison étrangère sur la base du message de demande de transfert intercellulaire et le message de réponse de transfert intercellulaire porte l'adresse de transfert intercellulaire du noeud mobile (71) sur la liaison étrangère.

2. Procédé selon la revendication 1, dans lequel, le message de demande comprend une option initiale de transfert intercellulaire dans laquelle les informations demandant d'obtenir l'adresse de transfert intercellulaire du noeud mobile (71) sur la liaison étrangère sont acheminées.

3. Procédé selon la revendication 2, dans lequel le message de demande de transfert intercellulaire comprend : un premier numéro de type de message pour représenter un type de message ; une première identité de transmission pour représenter une séquence d'envoi de message ; et l'option initiale de transfert intercellulaire, dans lequel l'option initiale de transfert intercellulaire comprend : un champ de code d'option initiale, un champ de longueur d'option initiale et un champ de contenu d'option initiale.

4. Procédé selon la revendication 1, dans lequel le message de réponse de transfert intercellulaire comprend : un second numéro de type de message pour représenter un type de message ; une seconde identité de transmission pour synchroniser des messages entre un récepteur de messages et un envoyeur de messages ; et une option de reconnaissance de transfert intercellulaire ;
l'adresse de transfert intercellulaire transmise par le message de réponse de transfert intercellulaire est transmise dans l'option de confirmation de transfert intercellulaire ; dans lequel le message de réponse comprend l'option de confirmation de transfert intercellulaire.

5. Procédé selon la revendication 4, dans lequel l'option de confirmation de transfert intercellulaire comprend : un champ de code d'option de confirmation, un champ de longueur d'option de confirmation, un champ d'adresse de transfert intercellulaire et un champ de contenu d'option de confirmation, dans lequel, le champ d'adresse de transfert intercellulaire porte l'adresse de transfert intercellulaire portée par le message de réponse de transfert intercellulaire.

6. Procédé selon la revendication 1, comprenant en outre avant l'étape de réception (301),
avant que le noeud mobile (71) ne passe de la liaison locale à la liaison étrangère, l'envoi (101) par le noeud mobile (71) du message de demande au serveur DHCP (72) de la liaison locale ; et
le procédé comprenant en outre, après l'étape de génération et d'envoi (303), la réception (102) par le noeud mobile (71) du message de réponse envoyé par le serveur DHCP (72) de la liaison locale, dans lequel l'adresse de transfert intercellulaire du noeud mobile (71) sur la liaison étrangère portée par le message de réponse est obtenue par le noeud mobile (71).

7. Procédé selon la revendication 1, comprenant en outre après l'étape d'adresse (302), le fait que le serveur DHCP (73) de la liaison étrangère, en fonction du message de demande de transfert intercellulaire, génère et envoie le message de réponse de transfert intercellulaire au serveur DHCP (72) de la liaison locale.

8. Serveur de protocole de configuration d'hôte dynamique, DHCP, (72) d'une liaison locale, **caractérisé en ce qu'**il comprend :
un module de réception (41) configuré pour recevoir un message de demande envoyé avant que le noeud mobile (71) ne passe d'une liaison locale à une liaison étrangère, le message de demande portant des informations de support demandant d'obtenir une adresse de transfert intercellulaire du noeud mobile (71) sur la liaison étrangère ;
un module de demande d'adresse (42) configuré pour, en fonction du message de demande, adresser une demande à un serveur DHCP (73) de la liaison étrangère pour obtenir l'adresse de transfert intercellulaire du noeud mobile (71) sur la liaison étrangère ;
un module d'envoi (43) configuré pour générer et envoyer un message de réponse au noeud mobile (71), le message de réponse portant une adresse de transfert intercellulaire obtenue après que le serveur DHCP (72) de la liaison locale a adressé construit une demande au serveur DHCP (73) de la liaison étrangère, en fonction du message de demande, **caractérisé en ce que** le module de demande d'adresse comprend :
une unité d'envoi de demande (621) configurée pour, sur la base du message de demande, générer et envoyer un message de demande de transfert intercellulaire au serveur DHCP (73) de la liaison étrangère, demandant d'obtenir une adresse de transfert intercellulaire du noeud mobile (71) sur la liaison étrangère ;
une unité de réception d'adresse (622) configurée pour recevoir un message de réponse de transfert intercellulaire, dans lequel le message de réponse de transfert intercellulaire est généré par le serveur DHCP (73) de la liaison étrangère sur la base du message de demande de transfert intercellulaire et porte l'adresse de transfert intercellulaire du noeud mobile (71) sur la liaison étrangère.

9. Serveur DHCP (72) d'une liaison locale selon la revendication 8, dans lequel, le message de demande comprend une option initiale de transfert intercellulaire dans laquelle les informations demandant d'obtenir l'adresse de transfert intercellulaire du noeud mobile (71) sur la liaison étrangère sont acheminées, et
dans lequel le message de demande de transfert intercellulaire comprend : un premier numéro de type de message pour représenter un type de message ; une première identité de transmission pour représenter une séquence d'envoi de message ; et l'option initiale de transfert intercellulaire, dans lequel l'option initiale de transfert intercellulaire comprend : un champ de code d'option initiale, un champ de longueur d'option initiale et un champ de contenu d'option initiale.

10. Serveur DHCP (72) d'une liaison locale selon la revendication 8, dans lequel le message de réponse de transfert intercellulaire comprend : un second numéro de type de message pour représenter un type de message ; une seconde identité de transmission pour synchroniser des messages entre un récepteur de messages et un envoyeur de messages ; et une option de reconnaissance de transfert intercellulaire ; l'adresse de transfert intercellulaire du noeud mobile (71) sur la liaison étrangère portée par le message de réponse de transfert intercellulaire est portée dans l'option de confirmation de transfert intercellulaire ;
dans lequel le message de réponse comprend l'option de confirmation de transfert intercellulaire, et
dans lequel l'option de confirmation de transfert intercellulaire comprend : un champ de code d'option de confirmation, un champ de longueur d'option de confirmation, un champ d'adresse de transfert intercellulaire et un champ de contenu d'option de confirmation, dans lequel le champ d'adresse de transfert intercellulaire porte l'adresse de transfert intercellulaire du noeud mobile (71) sur la liaison étrangère portée par le message de réponse de transfert intercellulaire.
